# EUROPÄISCHE PATENTANMELDUNG

(11) **EP 3 231 496 A1**
(43) Veröffentlichungstag der Anmeldung: **18.10.2017**
(21) Anmeldenummer: 16165609.5
(22) Anmeldetag: 15.04.2016
(51) Int. Cl.: B01D 29/54, B01D 29/21, B01D 29/23

(54) **FILTERELEMENT UND VERFAHREN ZUR HERSTELLUNG EINES FILTERELEMENTS**

(71) Anmelder: Filtertechnik Jäger GmbH, 89264 Weißenhorn (DE)
(72) Erfinder: Jäger, Roland, 89297 Roggenburg (DE); Schröder, Reinhard, 53902 Bad Münstereifel (DE)
(74) Vertreter: Müller Verweyen

(57) **Zusammenfassung**

Filterelement (1) zum Einsetzen in einen Druckaufnahmekorb (2) aufweisend
- ein oberes und ein unteres Ende (3, 4), sowie
- einen inneren und einen äußeren Filterkörper (5, 6), wobei
- der äußere Filterkörper (6) den inneren Filterkörper (5) umgibt, wobei
- der innere Filterkörper (5) einen Innenraum (7) bildet, wobei
- zwischen dem inneren und dem äußeren Filterkörper (5, 6) ein Zwischenraum (8) vorgesehen ist, der sich von dem oberen bis zu dem unteren Ende (3, 4) erstreckt, wobei
- an dem oberen Ende (3) ein oberes Abdichtteil (9) vorgesehen ist, das dazu eingerichtet ist, ein zu filterndes Fluid ausschließlich über eine Einströmöffnung (10) in den Zwischenraum (8) einströmen zu lassen, wobei
- an dem unteren Ende (4) ein unteres Abdichtteil (11) vorgesehen ist, das dazu eingerichtet ist, den Zwischenraum (7) an dem unteren Ende (4) zu verschließen und eine Ausströmöffnung (12) bildet, über die das gefilterte Fluid aus dem Innenraum (7) ausströmen kann.

## Beschreibung

Die vorliegende Erfindung betrifft ein Filterelement zum Einsetzen in einen Druckaufnahmekorb gemäß dem Oberbegriff des unabhängigen Anspruchs 1 sowie ein korrespondierendes Verfahren zum Herstellen eines Filterelements. Weiterhin betrifft die Erfindung ein System umfassend einen Druckkorb und ein Filterelement.

Aus dem Stand der Technik ist es allgemein bekannt, ein Filterelement in einem Filtergehäuse anzuordnen, wobei das Filterelement innerhalb des Filtergehäuses von einem Druckaufnahmekorb gehalten und umgeben wird. Das Filtergehäuse weist eine Zuführung für das zu filternde Fluid auf, das auf das Filterelement trifft. Das Fluid durchströmt das Filterelement, wird gereinigt und fließt anschließend gefiltert über einen Abfluss des Filtergehäuses ab. Wegen dem im Filtergehäuse angeordneten Filterelement herrschen vor und hinter dem Filterelement unterschiedliche Druckniveaus, so dass auf das Filterelement ein Differenzdruck wirkt, durch den ein aus flexiblem und für ein Fluid durchlässigem Material bestehender Filterkörper beschädigt werden könnte. Um solch eine Beschädigung zu verhindern, ist das Filterelement in einem Druckaufnahmekorb eingesetzt. Dieser Druckaufnahmekorb weist auf dessen Oberfläche verteilte Durchströmungsöffnungen auf, durch die das gefilterte Fluid strömen kann, wobei der Druckaufnahmekorb gleichzeitig eine Abstützfläche für das Filterelement bildet, so dass eine Zerstörung des Filterelements aufgrund des Druckgradienten verhindert werden kann.

Weiter offenbart die EP 1 769 835 B1 einen Fluidfilter mit einer äußeren und einer inneren Hülse. Die beiden Hülsen sind aus flexiblem, durchlässigem Material hergestellt, wobei die innere Hülse im Wesentlichen konzentrisch bezüglich der äußeren Hülse angeordnet ist. Die innere Hülse weist ein geschlossenes oberes Ende auf und ist an ihrem unteren Ende geöffnet. Die äußere Hülse umgibt die innere Hülse, so dass zwischen den beiden Hülsen ein Ringraum entsteht. Durch das Einbringen des zu reinigenden Fluids in den Zwischenraum zwischen der äußeren und der inneren Hülse wird das Fluid entweder durch das durchlässige Material der inneren Hülse oder der äußeren Hülse gedrückt, so dass beide Hülsen als Filter dienen. Damit die innere flexible Hülse während des Filtrationsvorgangs ihre Hülsenform beibehalten kann, wird gemäß der Lehre der EP 1 769 835 B1 eine Tragstruktur vorgeschlagen, über die die innere Hülse gespannt und damit in Form gebracht werden kann. Die Filterfläche ist dabei im Vergleich zum Fertigungsaufwand relativ klein. Ferner ist diese Vorrichtung nicht leicht handhabbar.

Es ist Aufgabe der vorliegenden Erfindung, ein Filterelement mit einem inneren und einem äußeren Filterkörper anzugeben, das einen vereinfachten Aufbau aufweist und eine verbessertes Filtrationsverhalten bietet. Weiter ist es Aufgabe der vorliegenden Erfindung, ein System umfassend einen Druckaufnahmekorb und ein Filterelement anzugeben, das einen vereinfachten Aufbau aufweist. Ferner ist es Aufgabe der vorliegenden Erfindung, ein Verfahren anzugeben, mit dem das erfindungsgemäße Filterelement kostengünstig hergestellt werden kann.

Die Aufgabe wird durch die Merkmale der unabhängigen Ansprüche gelöst. Weitere bevorzugte Ausführungsformen sind den abhängigen Ansprüchen, der Beschreibung und den Zeichnungen zu entnehmen.

Gemäß dem Grundgedanken der Erfindung wird ein Filterelement zum Einsetzen in einen Druckaufnahmekorb vorgeschlagen, aufweisend ein oberes und ein unteres Ende, sowie einen inneren und einen äußeren Filterkörper, wobei der äußere Filterkörper den inneren Filterkörper umgibt, wobei zwischen dem inneren und dem äußeren Filterkörper ein Zwischenraum vorgesehen ist, der sich von dem oberen bis zu dem unteren Ende erstreckt, wobei der innere Filterkörper einen Innenraum bildet, wobei an dem oberen Ende ein oberes Abdichtteil vorgesehen ist, das dazu eingerichtet ist, ein zu filterndes Fluid ausschließlich über eine Einströmöffnung in den Zwischenraum einströmen zu lassen, wobei an dem unteren Ende ein unteres Abdichtteil vorgesehen ist, das dazu eingerichtet ist, den Zwischenraum an dem unteren Ende zu verschließen und eine Ausströmöffnung bildet, über die das gefilterte Fluid aus dem Innenraum ausströmen kann.

Unter dem Zwischenraum, der sich von dem oberen bis zu dem unteren Ende erstreckt, ist im Sinne dieser Anmeldung ein Zwischenraum zu verstehen, der sowohl an dem unteren als auch an dem oberen Abdichtteil unmittelbar angrenzt.

Durch den erfindungsgemäßen Aufbau des Filterelements kann sichergestellt werden, dass das zu reinigende Fluid ausschließlich in den Zwischenraum eingebracht wird. Das Fluid kann dann sowohl den außenliegenden äußeren Filterkörper als auch den innenliegenden inneren Filterkörper durchströmen. Durch die zwei Filterkörper wird insgesamt eine vergrößerte Filteroberfläche geschaffen. Durchströmt das Fluid den innenliegenden Filterkörper, so strömt das Fluid in den Innenraum und kann von dort über die Ausströmöffnung des Filterelements aus dem Innenraum abströmen.

Ferner ist ein besonderer Vorteil der vorliegenden Erfindung darin zu sehen, dass durch die Abdichtteile ein stabiler Aufbau des Filterelements erreicht werden kann, d.h. es kann auf zusätzliche Mittel zur Stabilisierung, wie beispielsweise eine Strukturbauteile, verzichtet werden. Dies erlaubt insgesamt einen einfacheren Aufbau und damit eine kostengünstigere Fertigung des Filterelements.

Weiter vorzugsweise ist das obere Abdichtteil mit einer Endkappe verbunden, die dazu eingerichtet ist, eine Abdichtfunktion gegenüber einem Filtergehäuse zu übernehmen, wenn das Filterelement in das Filtergehäuse eingesetzt ist. Die Endkappe stellt durch ihre Abdichtfunktion sicher, dass das Fluid durch das Filterelement strömt und nicht daran vorbei in das Filtergehäuse strömen kann. Es wird so sichergestellt, dass das Fluid vollständig gefiltert wird. In einer alternativen Ausführungsform der Erfindung können die Endkappe und das obere Abdichtteil auch einteilig ausgeführt sein; es wird so der Aufbau des Filterelements weiter vereinfacht.

Es wird weiter vorgeschlagen, dass wenigsten eines der Abdichtteile sowohl mit dem inneren als auch mit dem äußeren Filterkörper verbunden ist. Vorzugsweise sind dabei sowohl die obere Abdichtplatte und/oder die untere Abdichtplatte sowohl mit dem inneren als auch mit dem äußeren Filterkörper verbunden, so dass diese Elemente eine in sich stabile Einheit bilden. Die Stabilität ist bei dieser Ausführungsform ausreichend groß, um den Differenzdrücken, die während des Filtrationsvorgangs auf die Filterkörper einwirken, standzuhalten. Somit können mit dem erfindungsgemäßen Aufbau auch die gewünschten Systemzuverlässigkeitseigenschaften erreicht werden.

Vorzugsweise handelt es sich bei der Verbindung zwischen den Abdichtteilen und den Filterkörpern um eine stoffschlüssige Verbindung, insbesondere vorzugsweise um eine Schweißverbindung. Weiter vorzugsweise ist der Grundwerkstoff der Abdichtteile Kunststoff.

Bevorzugt weisen die Filterkörper die Grundform eines Hohlzylinders auf. Der Innenradius des äußeren Filterkörpers muss dabei größer sein als der Außenradius des inneren Filterkörpers. Durch die Ausgestaltung der Filterkörper in Form eines Hohlzylinders kann auf einfache Weise der Zwischenraum zwischen dem ersten und dem zweiten Filterkörper gebildet werden. Vorzugsweise sind die Filterkörper bezüglich ihrer Längsachse koaxial ausgerichtet, so dass in Längsrichtung ein konstanter Durchströmungsquerschnitt in dem Zwischenraum sichergestellt werden kann. Damit wird erreicht, dass auch die Filterkörper möglichst gleichmäßig durchströmt werden.

Vorzugsweise weist wenigstens einer der Filterköper mehrere Falten zur Erhöhung der Filteroberfläche auf. Es wird damit eine Erhöhung der Oberfläche der Filterkörper erreicht, so dass die Durchflussmenge des Fluids bei gleichbleibender Baugröße gesteigert werden kann. Daneben hat die Faltung bei der erfindungsgemäßen Ausführungsform den technischen Effekt, dass durch die Falten die Stabilität der Filterkörper deutlich gesteigert werden kann. Dadurch kann die durch die Verbindung der Filterkörper mit den Abdichtteilen ohnehin schon erreichte Steifigkeit weiter erhöht werden. Die Falten verlaufen vorzugsweise parallel zur Längsachse des Filterelements.

In einem bevorzugten Ausführungsbeispiel weist wenigsten einer der Filterkörper Fasern aus thermoplastischem Kunststoff auf; weiter bevorzugt weisen beide Filterkörper Fasern aus thermoplastischem Kunststoff auf. Diese haben sich insbesondere bei der Verschweißung der Abdichtteile mit den Filterkörpern für besonders vorteilhaft erwiesen. Beispielsweise ist es möglich, durch Infrarotschweißen nur eine dem Filterkörpern zugewandte Schicht der Abdichtplatten aufzuschmelzen, die im montierten Zustand den Filterkörpern zugewandt ist. Anschließend kann die aufgeschmolzene Schicht dann unter Druck mit einem oder mehreren Filterkörpern verbunden werden, so dass eine stabile Verbindung entsteht.

Bevorzugt ist die Höhe der Falten an wenigstens einem der Filterkörper unterschiedlich. Damit kann ein besseres Abströmverhalten erreicht werden, nämlich dadurch, dass die zwischen zwei höheren Falten liegende niedrige Falte als eine Art Beabstandungsmittel zwischen zwei Falten wirkt. Vorzugsweise folgt dabei jeder hohen Falte im Wechsel eine niedrige Falte. Weiter vorzugsweise ist die höhere Falte doppelt so hoch wie die niedrigere Falte. Durch diese Beabstandung zweier hoher Falten kann nach dem Durchströmen des Filterkörpers an den hohen Falten ein verbessertes Abströmverhalten erreicht werden, da ein ausreichender Abstand zur benachbarten Abströmflächen der hohen Falte gegeben ist. Vorzugsweise kann auch die Höhe der Falten zwischen dem inneren und dem äußeren Filterkörper voneinander abweichen, so dass beispielsweise durch die unterschiedliche Höhe der Falten die Filteroberflächen des inneren und des äußeren Filterkörpers im Wesentlichen identisch groß sind, d.h. die Filteroberflächen des inneren und des äußeren Filterkörpers vorzugsweise um weniger als 20 % voneinander abweichen, weiter vorzugsweise um weniger als 10 % voneinander abweichen.

In einer weiteren bevorzugten Ausführungsform der Erfindung ist ein Abstandshalter vorgesehen, der dazu eingerichtet ist, die Falten in einem vordefinierten Abstand zu halten. Durch den Abstandshalter kann insgesamt das Durchströmungsverhalten des Filterkörpers verbessert werden. Der Abstandshalter erfüllt die Funktion, dass die Falten vorzugsweise über die gesamte Erstreckung entlang der Längsachse des Filterkörpers konstant voneinander beabstandet sind. Es wird dadurch erreicht, dass annähernd die gesamte Filteroberfläche des Filterkörpers gleichmäßig durchströmt wird. Vorzugsweise ist der Abstandshalter sowohl an dem ersten als auch an dem zweiten Filterkörper vorgesehen. Vorzugsweise ist der Abstandshalter durch ein Gewebe, weiter vorzugsweise durch ein gewebtes oder extrudiertes Gewebe, gebildet, das mit dem Filterkörper gemeinsam gefaltet wird. Anders gesagt handelt es sich bei dem Abstandshalter vorzugsweise um einen Teil des Filterkörpers, der jedoch nicht die Funktion des Filterns übernimmt. Alternativ kann der Abstandshalter als separates Element und nicht als Teil des eigentlichen Filterkörpers ausgeführt sein.

Es wird weiter ein formstabiles Stützelement vorgeschlagen, das dazu eingerichtet ist, den inneren Filterkörper gegenüber dem Innenraum abzustützen. Es wird damit sichergestellt, dass der Innenraum auch im Betrieb einen ausreichenden Durchströmungsquerschnitt aufweist, so dass das zu reinigende Fluid beim Durchströmen des ersten Filterkörpers von dem Zwischenraum in den Innenraum abströmen kann. Weiter wird durch das Stützelement sichergestellt, dass der innere Filterkörper nicht aufgrund des zwischen dem Zwischenraum und dem Innenraum herrschenden Differenzdrucks zerstört wird. Vorzugsweise weist das Stützelement Durchströmungsöffnungen auf und erstreckt sich weiter vorzugsweise über die gesamte Länge des ersten Filterkörpers. Sofern der erste Filterkörper die Grundform eines Hohlzylinder einnimmt, ist das Stützelement ebenfalls bevorzugt in der Form eines Hohlzylinder ausgeführt, der so dimensioniert ist, dass er in den ersten Filterkörper eingeschoben werden kann.

Erfindungsgemäß wird weiter ein System aufweisend einen Druckaufnahmekorb und ein Filterelement vorgeschlagen, wobei der Druckaufnahmekorb eine erste Öffnung aufweist, über die das Filterelement in den Druckaufnahmekorb einsetzbar ist, und eine zweite Öffnung, die mit einer Ausströmöffnung des Filterelements derart zusammenwirkt, dass ein gefilterte Fluid aus einem Innenraum eines inneren Filterkörpers über die Ausströmöffnung und die zweite Öffnung abströmen kann. Durch die erfindungsgemäße Ausführungsform kann die Ausströmöffnung des Filterelements strömungstechnisch mit der zweiten Öffnung des Druckaufnahmekorbs zusammenwirken, so dass ein störungsfreies Abströmen des gefilterten Fluids aus dem Innenraum ermöglicht wird. Vorzugsweise ist die Durchströmungsfläche der zweiten Öffnung des Druckaufnahmekorbs wenigstens genauso groß wie die Ausströmöffnung des Filterelements.

Erfindungsgemäß wird weiter ein Verfahren zur Herstellung eines erfindungsgemäßen Filterelements vorgeschlagen, wobei in einem Verfahrensschritt a) ein innerer und ein äußerer Filterkörper gefertigt werden, wobei diese derart dimensioniert sind, dass der innere Filterkörper entlang einer Längsachse in den äußeren Filterkörper bewegbar ist, in einem Verfahrensschritt b) der äußere Filterkörper ortsfest gehalten und dabei der innere Filterkörper durch ein Montageelement entlang der Längsachse in den Innenraum des äußeren Filterkörpers eingeschoben wird und nach Erreichen der Montageposition gegenüber dem äußeren Filterkörper fixiert wird, in einem Verfahrensschritt c) ein erstes Abdichtteil an der den Filterkörpern zugewandten Fläche mit den Filterkörpern stoffschlüssig verbunden wird, und in einem Verfahrensschritt d) ein zweites Abdichtteil an der den Filterkörpern zugewandten Fläche mit den Filterkörpern stoffschlüssig verbunden wird.

Dabei ist unter der Montageposition im Sinne dieser Anmeldung die Anordnung bzw. Positionierung der Bestandteile des Filterelements in der Position zu verstehen, in der sie miteinander verbunden werden.

Die stoffschlüssige Verbindung zwischen den Abdichtteilen und den Filterkörpern ist vorzugsweise durch eine Schweißverbindung gebildet. Alternativ ist aber auch eine Klebeverbindung möglich.

Mit diesem Verfahren wird sichergestellt, dass das Filterelement auf einfache Art und Weise gefertigt werden kann und zwar ohne zusätzliche stabilisierende Mittel vorzusehen, die dazu geeignet sind, das Filterelement unter Betriebsdruckverhältnissen zu stabilisieren.

Vorzugsweise werden die beiden Abdichtteile während des Fügens in jeweils einer Kavität gehalten. Weiter vorzugsweise ist als Montageelement ein Dorn vorgesehen, auf den der innere Filterkörper aufgesteckt und somit der innere Filterkörper mithilfe des Dorns vorzugsweise zentrisch in den äußeren Filterkörper eingeschoben werden kann. Der äußere Filterkörper ist währenddessen vorzugsweise in einem Spannkörper mechanisch gehalten. Weiter vorzugsweise handelt es sich dabei um zwei mechanische Halbschalen, die dazu eingerichtet sind, den äußeren Filterkörper zu halten. Vorzugsweise wird im gleichen Verfahrensschritt, in dem auch das obere Abdichtteil mit den Filterkörpern verbunden wird, eine Endkappe an das obere Abdichtteil angebracht, die dazu dient, eine Abdichtung des Filterelements gegenüber einem Filtergehäuse, in das das Filterelement eingesetzt ist, sicherzustellen.

Vorzugsweise wird in einem weiteren Verfahrensschritt a') vor dem Verfahrensschritt b) wenigstens einer der Filterkörper mit einem Gitterelement überzogen, so dass der Filterkörper stabilisiert wird. Durch diese Stabilisierung können die Systemzuverlässigkeitseigenschaften des Filterkörpers verbessert werden. Vorzugsweise wird sowohl der innere als auch der äußere Filterkörper mit dem Gitterelement überzogen. Dieses Gitterelement kann vorzugsweise auch die Funktion eines Abstandselements einnehmen, da es die radial nach außen ragenden Faltkanten stabilisiert und somit der Abstand der einzelnen Falten konstant gehalten werden kann. Vorzugsweise handelt es sich bei dem Gitterelement um ein schlauchförmiges oder zylindrisches Element mit rauten- und/oder rechteckförmigen Öffnungen, das die Filterkörper von radial außen umgibt. Vorzugsweise ist dieses schlauchförmige oder zylindrische Element dazu eingerichtet, über die Filterkörper gespannt zu werden, d.h. es umspannt diese von außen.

Weiter vorzugsweise wird in einem Verfahrensschritt a") vor dem Verfahrensschritt b) in einem Innenraum des inneren Filterkörpers ein Stützelement eingebracht. In der Praxis hat sich das Einbringen des Stützelements in diesem Verfahrensschritte als vorteilhaft erwiesen. Während des Betriebs dient das Stützelement dazu, die durch den Differenzdruck zwischen dem Zwischenraum und dem Innenraum auf den inneren Filterkörper wirkenden Kräfte aufzunehmen und dadurch die Beanspruchbarkeit des Filterelements zu erhöhen.

Ferner wird vorgeschlagen, dass das Montageelement im Verfahrensschritt d) entfernt oder ersetzt wird. Durch das Entfernen des Montageelements wird gewährleistet, dass anschließend auch das zweite Abdichtteil mit den Filterkörpern verbunden werden kann, ohne dass das Montageelement in dem Filterelement verbleiben muss. Weiter ist es jedoch bevorzugt, dass das Montageelement durch ein weiteres Montageelement ersetzt wird. Hierzu wird vorzugsweise zunächst der innere Filterkörper mithilfe des Dorns von dem oberen Ende aus in den äußeren Filterkörper eingeschoben. Sobald der innere Filterkörper gegenüber dem äußeren Filterkörper in der Montageposition ist, wird an dem unteren Ende das untere Abdichtteil mit dem ersten und dem zweiten Filterkörper verbunden. Anschließend wird der Dorn wieder nach oben abgezogen. Der innere Filterkörper verbleibt dabei durch die Verbindung mit dem unteren Abdichtteil in der Montageposition. Anschließend wird durch die Ausströmöffnung an dem unteren Ende, die in dem unteren Abdichtteil vorgesehen ist, ein weitere Montageelement in den inneren Filterkörper eingeschoben, so dass dieser während des Fügevorgangs des oberen Abdichtteils mit den beiden Filterkörpern gegenüber dem äußeren Filterkörper zentriert bleibt. Vorzugsweise wird das weitere Montageteil ebenfalls durch einen Dorn gebildet.

Es wird weiter vorgeschlagen, dass die stoffschlüssige Verbindung der Abdichtteile in den Verfahrensschritten c) und d) durch Aufschweißen mittels Infrarotbestrahlung erfolgt. In der Praxis hat sich gezeigt, dass durch Infrarotbestrahlung die Abdichtteile an den den Filterkörpern zugewandten Oberflächen besonders effektiv aufgeschmolzen werden können. Dies ist insbesondere dann vorteilhaft, wenn die Abdichtteile aus Kunststoff mit thermoplastischen Fasern gefertigt sind.

Die Erfindung wird im Folgenden anhand bevorzugter Ausführungsformen unter Bezugnahme auf die beigefügten Figuren erläutert. Dabei zeigt
- Fig. 1: eine Schnittansicht eines erfindungsgemäßen Filterelements;
- Fig. 2: eine schematische Darstellung einer Faltung eines Filterkörpers;
- Fig. 3: eine Schnittansicht eines erfindungsgemäßen Druckaufnahmekorbs; und
- Fig. 4: eine Schnittansicht eines erfindungsgemäßen Systems aufweisend einen Druckaufnahmekorb und ein Filterelement.

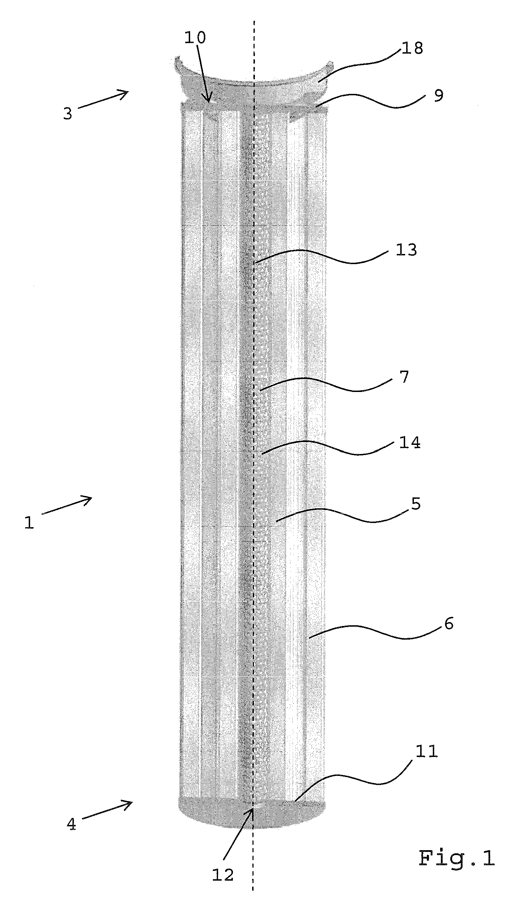

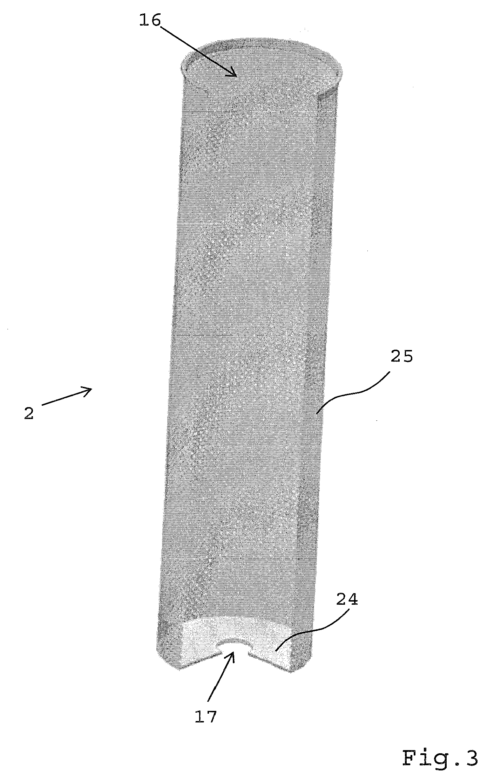

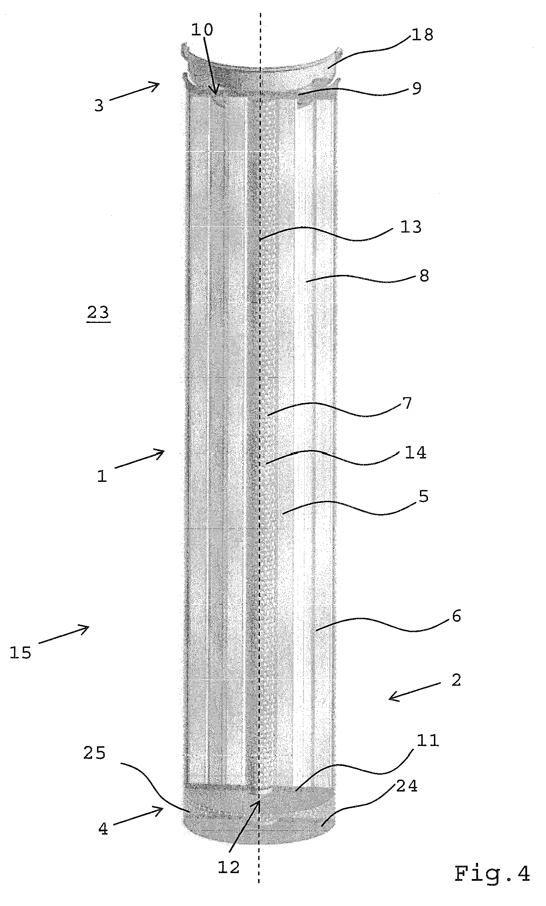

Figur 1 zeigt ein erfindungsgemäßes Filterelement 1, das im Wesentlichen einen äußeren Filterkörper 6, einem inneren Filterkörper 5 sowie ein oberes Abdichtteil 9 und ein unteres Abdichtteil 11 umfasst. Das erfindungsgemäße Filterelement 1 ist dazu geeignet, in einem Druckaufnahmekorb 2, siehe Figuren 3 und 4, eingesetzt zu werden. Zusammen mit dem Druckaufnahmekorb 2 ist das Filterelement 1 in einem nicht gezeigten Filtergehäuse angeordnet.

Weiterhin weist das Filterelement 1 ein oberes Ende 3 und ein unteres Ende 4 auf. Dabei ist der äußere Filterkörper 6 derart ausgeführt, dass er über die gesamte Erstreckung von dem oberen Ende 3 bis zu dem unteren Ende 4 den inneren Filterkörper 5 umgibt. Vorzugsweise weist sowohl der innere als auch der äußere Filterkörper 5 und 6 die Grundform eines Hohlzylinders auf. Weiter vorzugsweise sind die beiden Filterkörper 5 und 6 gegenüber einer Längsachse 13 des Filterelements 1 koaxial ausgerichtet.

Die beiden Filterkörper 5 und 6 sind vorzugsweise aus einem flexiblen, durchlässigen Material gefertigt, das als Filtermedium dient. Es ist weitere bevorzugt, dass die Filterkörper 5 und 6 Fasern aus thermoplastischem Kunststoff aufweisen.

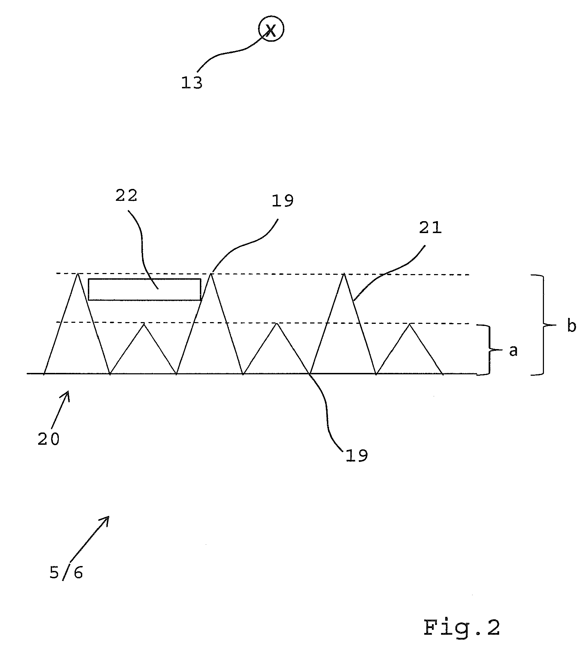

Die bevorzugte Ausführungsform der Filterkörper 5 bzw. 6 ist in Figur 2 schematisch dargestellt, wobei es sich bei dem in Figur 2 dargestellten Filterkörper 5 und/oder 6 um den inneren und/oder den äußeren Filterkörper 5 und/oder 6 handeln kann. Die Darstellung zeigt den Filterkörper 5 und/oder 6 aus einer Blickrichtung entlang der Längsachse 13, wobei aus Gründen der einfacheren Darstellbarkeit auf die Darstellung der Krümmung des Filterkörpers 5 und/oder 6 verzichtet wurde. Wie dort dargestellt weist der Filterkörper 5 und/oder 6 mehrere Falten 20 auf, wobei sich die dadurch gebildeten Faltkanten 19 und damit auch die Falten 20 entlang der Längsachse 13 erstrecken. Bevorzugt handelt es sich um eine Vielzahl von Falten 20, so dass es sich vorzugsweise um einen plissierten Filterkörper 5 und/oder 6 handelt. Durch die Falten 20 wird eine Vergrößerung einer Filteroberfläche 21 erreicht. Daraus ergibt sich eine verbesserte Partikelabscheidung, eine längere Standzeit des Filterelements 1 sowie eine höhere Schmutzaufnahmefähigkeit.

Des Weiteren bewirken die Falten 20 eine Stabilisierung des ursprünglich flexiblen Grundmaterials des Filterkörpers 5 und/oder 6. Damit kann auf zusätzliche, separate Stützelemente zur Stabilisierung des Filterelements 1 verzichtet werden. Insgesamt vereinfacht sich damit der Aufbau des Filterelements 1.

Ferner zeigt Figur 2, dass sich die Höhe der Falten 20 des entsprechenden Filterkörpers 5 und/oder 6 unterscheiden. Vorzugsweise folgt dabei einer Falte 20 mit einer niedrigen Höhe a eine Falte 20 mit einer großen Höhe b. Durch diesen Wechsel von Falten 20 großer Höhe b und niedriger Höhe a kann das Abströmverhalten des jeweiligen Filterkörpers 5 und/oder 6 verbessert werden. Die Falte 20 mit der kleinen Höhe a wirkt dabei wie eine Art Beabstandungselement zwischen zwei Falten 20 mit großer Höhe b. Es wird damit ein größerer freier Raum in Strömungsrichtung hinter dem jeweiligen Filterkörper 5 und/oder 6 geschaffen, so dass insgesamt der das Filterelement 1 durchströmende Fluidstrom vergrößert werden kann. Vorzugsweise entspricht die Höhe a 30% bis 70 % der Höhe von b, weiter vorzugsweise 40% bis 60% und insbesondere vorzugsweise 50%.

Schließlich kann die Höhe der Falten a und/oder b bei den inneren Filterkörper 5 von den entsprechenden Höhen des äußeren Filterkörpers 6 abweichen.

Weiterhin ist es bevorzugt, dass zwischen den einzelnen Falten 20 vorzugsweise jeweils ein Abstandshalter 22 vorgesehen ist, die den Abstand zweier Falten 20 in Umfangsrichtung konstant halten sollen. Vorzugsweise ist der Abstandshalter 22 durch ein Gewebe, weiter vorzugsweise durch ein gewebtes oder extrudiertes Gewebe, gebildet, das mit dem Filterkörper 5 gemeinsam gefaltet wird. Anders gesagt handelt es sich bei dem Abstandshalter 22 vorzugsweise um einen Teil des Filterkörpers 5, der jedoch nicht die Funktion des Filterns übernimmt. Alternativ kann der Abstandshalter 22 als separates Element und nicht als Teil des eigentlichen Filterkörpers 5 ausgeführt sein.

In einer bevorzugten Ausführungsform kann der innere und/oder äußere Filterkörper 5 und/oder 6 auch von einem Gitterelement umgeben sein. Bei dem Gitterelement handelt es sich vorzugsweise um ein Rautengitter, das den hohlzylinderförmigen Filterkörper 5 und/oder 6 schlauchförmig umgibt. Es wird dadurch erreicht, dass die Filterkörper 5 und/oder 6 dadurch an Stabilität gewinnen und somit insgesamt der Filterkörper 1 stabiler ist. Weiter kann das Gitterelement auch als Abstandshalter 22 dienen, denn dieses liegt an den Faltkanten 19 der Filterkörper 5 und/oder 6 an und bewirkt dadurch, dass die Faltkanten 19 und damit auch die Falten 20 selbst in einem vordefinierten Abstand gehalten werden können.

Der Außenradius des inneren Filterkörpers 5 ist kleiner als der Innenradius des äußeren Filterkörpers 6, so dass zwischen dem inneren und dem äußeren Filterkörper 5 und 6 ein Zwischenraum 8 entsteht. Im Falle einer hohlzylindrischen Form der beiden Filterkörper 5 und 6 weist der Zwischenraum 8 eine ringförmige Geometrie auf. Dieser ringförmige Zwischenraum 8 erstreckt sich erfindungsgemäß von dem oberen Ende 3 bis zu dem unteren Ende 4.

An dem oberen Ende 3 ist der innere Filterkörper 5 und der äußere Filterkörper 6 über eine stoffschlüssige Verbindung, vorzugsweise über eine Schweißverbindung, mit dem oberen Abdichtteil 9 verbunden. Die Abdichtteile 9 und 11 sind vorzugsweise aus Kunststoff gefertigt und weisen weiter vorzugsweise Fasern aus thermoplastischem Kunststoff auf. Durch diesen Werkstoff ist gewährleistet, dass die Abdichtteile 9 und 11 mit den beiden Filterkörpern 5 und 6 verschweißt werden können. Hierzu wird vorzugsweise die Oberfläche der Filterkörper 5 und 6, die den Filterkörpern 5 und 6 zugewandt sind, mit Infrarot aufgeschmolzen und anschließend an den Stirnseiten der Filterkörper 5 und 6 angepresst, so dass die stoffschlüssiger Schweißverbindung entsteht. Das obere Abdichtteil 9 weist wenigstens eine Einströmöffnung 10 auf, die derart angeordnet und eingerichtet ist, dass das zu filterndes Fluid über die Einströmöffnung 10 ausschließlich in den Zwischenraum 8 einströmen kann.

Ein durch den inneren Filterkörper 5 gebildeter Innenraum 7 wird durch das obere Abdichtteil 9 an dem oberen Ende 3 strömungstechnisch abgedichtet.

Vorzugsweise ist an dem oberen Abdichtteil 9 eine separate Endkappe 18 vorgesehen, die dazu dient, das nicht dargestellte Filtergehäuse gegenüber dem Filterelement 1 abzudichten. In einer alternativen Ausführungsform kann die Endkappe 18 auch durch das obere Abdichtteil 9 gebildet sein.

Weiter ist an dem unteren Ende 4 ein unteres Abdichtteil 11 vorgesehen, das vorzugsweise mit dem inneren und dem äußeren Filterkörper 5 und 6 verbunden ist. Das untere Abdichtteil 11 dichtet den Zwischenraum 8 an dem unteren Ende 4 ab, so dass das Fluid über den inneren und/oder den äußeren Filterkörper 5 und/oder 6 abströmen muss. Ferner ist das untere Abdichtteil 11 dazu eingerichtet, den Innenraum 7 an dem unteren Ende 4 strömungstechnisch nicht abzudichten, so dass das gefilterte Fluid aus dem Innenraum 7 über eine Ausströmöffnung 12 abströmen kann.

Durch das Einströmen des Fluids in den Zwischenraum 8 wird somit sichergestellt, dass das Fluid entweder nach radial innen durch den inneren Filterkörper 5 strömt oder nach radial außen durch den äußeren Filterkörper 6. In beiden Fällen kommt es zu einer Filterung des Fluids.

Der Anteil des Fluids der durch den inneren Filterkörper 5 in den Innenraum 7 strömt, kann den Innenraum 7 an dem oberen Ende 3 nicht verlassen, da dieser durch das obere Abdichtteil 9 strömungstechnisch begrenzt ist. Das gefilterte Fluid in dem Innenraum 7 kann den Innenraum 7 nur über die Ausströmöffnung 12 am dem unteren Ende 4 verlassen.

Das innere Filterelement 5 bewirkt einen Druckverlust, so dass in dem Zwischenraum 8 im Vergleich zu dem Innenraum 9 ein höheres Druckniveau herrscht und damit ein Differenzdruck zwischen dem Zwischenraum 8 und dem Innenraum 7 in einem Betriebszustand eingestellt ist. Dieser Differenzdruck kann dazu führen, dass die von radial außen auf den inneren Filterkörper 5 wirkenden Kräfte so groß sind, dass der innere Filterkörper 5 zerstört wird, beispielsweise durch ein Aufreißen. Aus diesem Grund ist vorzugsweise in dem Innenraum 7 ein Stützelement 14 vorgesehen, dass zumindest an den radial innen liegenden Faltkanten 19 anliegt und somit den inneren Filterkörper 5 nach radial innen abstützt. Somit kann auch bei größeren Differenzdrücken gewährleistet werden, dass der innere Filterkörper 5 nicht zerstört wird. Vorzugsweise ist das innere Stützelement 14 aus Kunststoff, weiter vorzugsweise aus einem gelochten Rohr aus Kunststoff. Durch die vorteilhafte Ausführung des inneren Stützelements 14 aus Kunststoff kann das innere Stützelement 14 als integraler Bestandteil des Filterelements 1 ausgeführt werden. Alternativ ist das innere Stützelement 14 durch ein korbähnliches Bauteil in Form eines Hohlzylinders gebildet. Dieser kann beispielsweise durch ein aufgerolltes Lochblech gebildet sein.

Weiter vorzugsweise weist das Stützelement 14 über die gesamte Erstreckung entlang der Längsachse 13 Perforationen auf, durch die das gefilterte Fluid in den Innenraum 7 strömen kann.

Ferner zeigt Figur 3 einen Druckaufnahmekorb 2, der eine erste Öffnung 16 an dessen oberen Ende aufweist und eine zweite Öffnung 17 an dessen unterem Ende. Die erste Öffnung 16 ist dazu eingerichtet, das erfindungsgemäße Filterelement 1 aufzunehmen, so dass es in dem Druckaufnahmekorb 2 positioniert werden kann. Das in den Druckaufnahmekorb 2 eingesetzte Filterelement 1 ist in Figur 4 dargestellt.

Figur 4 zeigt ein erfindungsgemäßes System 15 aufweisend den Druckaufnahmekorb 2 sowie das darin eingesetzte Filterelement 1.

Die zweite Öffnung 17 des Druckaufnahmekorbs 2 ist derart eingerichtet, dass sie mit der Ausströmöffnung 12 des Filterelements 1 strömungstechnisch zusammenwirkt, und zwar so, dass das gefilterte Fluid in dem Innenraum 7 durch die Ausströmöffnung 12 und die zweite Öffnung 17 abströmen kann. Vorzugsweise ist dabei der Durchströmungsquerschnitt der zweiten Öffnung 17 wenigstens genau so groß wie der Durchströmungsquerschnitt der Ausströmöffnung 12.

Der Anteil des Fluids, der über dem äußeren Filterkörper 6 nach radial außen abströmt wird in einem nicht gezeigten Filtergehäuseraum 23 aufgefangen. Ähnlich wie zwischen dem Zwischenraum 8 und dem Innenraum 7 entsteht auch im Betrieb zwischen dem Zwischenraum 8 und dem Filtergehäuseraum 23 ein Druckgradient, wobei durch den höheren Druck in dem Zwischenraum 7 gegenüber dem Filtergehäuseraum 21 der äußere Filterkörper 6 nach radial außen gedrückt wird.

Um diesen Kräften entgegenzuwirken, ist der Druckaufnahmekorb 2 vorgesehen, der den äußeren Filterkörper 6 nach radial außen abstützt und damit der durch den Druckgradienten wirkenden Kraft entgegenwirkt. Es wird damit verhindert, dass der äußere Filterkörper 6 durch den hohen Druckgradienten zerstört wird. Der Druckaufnahmekorb 2 stützt den äußeren Filterkörper 6 an dessen radial außen liegenden Faltkanten 19 ab. Vorzugsweise ist der Druckaufnahmekorb 2 durch ein aufgerolltes Lochblech gebildet, das die Grundform eines Hohlzylinders aufweist und an seinem unteren Ende eine Bodenfläche 24 aufweist, die bis auf die zweite Öffnung 17 verschlossen ist. Vorzugsweise sind an dem Druckaufnahmekorb 2 wie in Figur 3 dargestellt die Durchströmungsöffnungen sowohl in Längsrichtung als auch in Umfangsrichtung über die gesamte Oberfläche einer Mantelfläche 25 verteilt. Auf der Bodenfläche 24 sind dagegen bis auf die zweite Öffnung 17 vorzugsweise keine Durchströmungsöffnungen vorgesehen.

## Patentansprüche

1. Filterelement (1) zum Einsetzen in einen Druckaufnahmekorb (2) aufweisend
- ein oberes und ein unteres Ende (3, 4), sowie
- einen inneren und einen äußeren Filterkörper (5, 6), wobei
- der äußere Filterkörper (6) den inneren Filterkörper (5) umgibt, wobei
- der innere Filterkörper (5) einen Innenraum (7) bildet, **dadurch gekennzeichnet, dass**
- zwischen dem inneren und dem äußeren Filterkörper (5, 6) ein Zwischenraum (8) vorgesehen ist, der sich von dem oberen bis zu dem unteren Ende (3, 4) erstreckt, wobei
- an dem oberen Ende (3) ein oberes Abdichtteil (9) vorgesehen ist, das dazu eingerichtet ist, ein zu filterndes Fluid ausschließlich über eine Einströmöffnung (10) in den Zwischenraum (8) einströmen zu lassen, wobei
- an dem unteren Ende (4) ein unteres Abdichtteil (11) vorgesehen ist, das dazu eingerichtet ist, den Zwischenraum (7) an dem unteren Ende (4) zu verschließen und eine Ausströmöffnung (12) bildet, über die das gefilterte Fluid aus dem Innenraum (7) ausströmen kann.

2. Filterelement (1) nach Anspruch 1, **dadurch gekennzeichnet, dass**
- wenigsten eines der Abdichtteile (9, 11) sowohl mit dem inneren als auch mit dem äußeren Filterkörper (5, 6) verbunden ist.

3. Filterelement (1) nach Anspruch 1 oder 2, **dadurch gekennzeichnet, dass**
- die Filterkörper (5, 6) die Grundform eines Hohlzylinders aufweisen.

4. Filterelement (1) nach einem der vorangehenden Ansprüche, **dadurch gekennzeichnet, dass**
- die Filterkörper (5, 6) bezüglich ihrer Längsachse (13) koaxial ausgerichtet sind.

5. Filterelement (1) nach einem der vorangehenden Ansprüche, **dadurch gekennzeichnet, dass**
- wenigstens einer der Filterköper (5, 6) mehrere Falten (20) zur Erhöhung einer Filteroberfläche (21) aufweist.

6. Filterelement (1) nach einem der vorangehenden Ansprüche, **dadurch gekennzeichnet, dass**
- wenigsten einer der Filterkörper (5, 6) Fasern aus thermoplastischem Kunststoff aufweist.

7. Filterelement (1) nach einem der vorangehenden Ansprüche, **dadurch gekennzeichnet, dass**
- die Höhe (a, b) der Falten (20) an wenigstens einem der Filterkörper (5, 6) unterschiedlich ist.

8. Filterelement (1) nach einem der vorangehenden Ansprüche, **dadurch gekennzeichnet, dass**
- ein Abstandshalter (22) vorgesehen ist, der dazu eingerichtet ist, die Falten (20) in einem vordefinierten Abstand zu halten.

9. Filterelement (1) nach einem der vorangehenden Ansprüche, **dadurch gekennzeichnet, dass**
- ein formstabiles Stützelement (14) vorgesehen ist, das dazu eingerichtet ist, den inneren Filterkörper (5) gegenüber dem Innenraum (7) abzustützen.

10. System (15) aufweisend einen Druckaufnahmekorb (2) und ein Filterelement (1) nach einem der Ansprüche 1 bis 9, wobei
- der Druckaufnahmekorb (2) eine erste Öffnung (16) aufweist, über die das Filterelement (1) in den Druckaufnahmekorb (2) einsetzbar ist, und
- eine zweite Öffnung (17), die mit einer Ausströmöffnung (12) des Filterelements (1) derart zusammenwirkt, dass ein gefilterte Fluid aus einem Innenraum (7) eines inneren Filterkörpers (5) über die Ausströmöffnung (12) und die zweite Öffnung (17) abströmen kann.

11. Verfahren zur Herstellung eines Filterelements (1) nach einem der Ansprüche 1 bis 9, wobei
- in einem Verfahrensschritt a) ein innerer und ein äußerer Filterkörper (5, 6) gefertigt werden, wobei diese derart dimensioniert sind, dass der innere Filterkörper (5) entlang einer Längsachse (13) in den äußeren Filterkörper (6) bewegbar ist,
- in einem Verfahrensschritt b) der äußere Filterkörper (6) ortsfest gehalten und dabei der innere Filterkörper (5) durch ein Montageelement entlang der Längsachse (13) in den Innenraum des äußeren Filterkörpers (6) eingeschoben wird und nach Erreichen der Montageposition gegenüber dem äußeren Filterkörper (6) fixiert wird,
- in einem Verfahrensschritt c) ein erstes Abdichtteil (9, 11) an der den Filterkörpern (5, 6) zugewandten Fläche mit den Filterkörpern (5, 6) stoffschlüssig verbunden wird, und
- in einem Verfahrensschritt d) ein zweites Abdichtteil (5, 6) an der den Filterkörpern (5, 6) zugewandten Fläche mit den Filterkörpern (5, 6) stoffschlüssig verbunden wird.

12. Verfahren nach Anspruch 11, **dadurch gekennzeichnet, dass**
- in einem weiteren Verfahrensschritt a') vor dem Verfahrensschritt b) wenigstens einer der Filterkörper (5, 6) mit einem Gitterelement überzogen wird, so dass der Filterkörper (5, 6) stabilisiert wird.

13. Verfahren nach Anspruch 11 oder 12, **dadurch gekennzeichnet, dass**
- in einem Verfahrensschritt a") vor dem Verfahrensschritt b) in einem Innenraum (7) des inneren Filterkörpers (5) ein Stützelement (14) eingebracht wird.

14. Verfahren nach einem der Ansprüche 11 bis 13, **dadurch gekennzeichnet, dass**
- das Montageelement im Verfahrensschritt d) entfernt oder ersetzt wird.

15. Verfahren nach einem der Ansprüche 11 bis 14, **dadurch gekennzeichnet, dass**
- die stoffschlüssige Verbindung der Abdichtteile (9, 11) in den Verfahrensschritten c) und d) durch Aufschweißen mittels Infrarotbestrahlung erfolgt.
